# FASCICULE DE BREVET EUROPEEN

(11) **EP 0 903 255 B1**
(45) Date de publication et mention de la délivrance du brevet: **07.01.2004**
(21) Numéro de dépôt: 98420164.0
(22) Date de dépôt: 22.09.1998
(51) Int. Cl.: B60K 15/077, F02M 37/10

(54) **Dispositif de pompage et réservoir de carburant pour un véhicule automobile équipé d'un tel dispositif**
Pumpvorrichtung und Kraftfahrzeug mit einer solchen Vorrichtung
Pumping device and motor vehicle fuel tank with such a device

(30) Priorité: 23.09.1997 FR 9712041
(43) Date de publication de la demande: 24.03.1999
(73) Titulaire: AISAN BITRON EUROPE SA, 58000 Nevers (FR)
(72) Inventeur: Lardrot, Eric, 58000 Nevers (FR); Da Silva, Horace, 58000 Nevers (FR); Contrand, Guy, 58130 Guerigny (FR)
(74) Mandataire: Myon, Gérard Jean-Pierre

(56) Documents cités:
- EP-A- 0 773 362
- DE-A- 4 242 242
- DE-A- 4 414 281
- DE-A- 4 444 854

## Description

L'invention a trait à un dispositif de pompage de carburant du type defini dans le préambule de la revendication 1 et connu par exemple de DE-A-44 14 281 ou DE-A-44 44 854, et à un réservoir de carburant pour véhicule automobile équipé d'un tel dispositif de pompage.

Par le document DE-A-44 14 281, on connaît un dispositif de pompage de carburant pour véhicule automobile dans lequel une pompe est supportée par un boîtier renfermant un filtre. Ce boîtier est supporté de façon rigide par l'une des parois du réservoir. Les vibrations générées par la pompe sont transmises directement à la paroi du réservoir, de sorte quelles peuvent se propager jusqu'à l'extérieur de celui-ci.

Par le document DE-A-44 44 854, on connaît un dispositif de pompage de carburant dans lequel un sous-ensemble comprenant, entre autres, une pompe et un filtre, est monté sans possibilité de déplacement sur un réservoir. En outre, la crépine associée à la pompe porte contre le fond du réservoir. Ainsi, les vibrations résultant du fonctionnement de la pompe sont-elles transmises au réservoir, comme avec le dispositif précédent.

L'invention vise à résoudre ces problèmes et à proposer un dispositif de pompage dans lequel les éléments susceptibles d'émettre des vibrations génératrices de bruit, tels qu'une pompe ou un régulateur de pression, ne sont pas reliés à la paroi extérieure du réservoir d'une façon permettant la propagation de ces vibrations.

Dans cet esprit, l'invention concerne un dispositif de pompage de carburant pour véhicule automobile comprenant une pompe munie d'une crépine d'aspiration et un boîtier sous pression contenant une cartouche filtrante, ce boîtier supportant la pompe, la crépine et un conduit reliant la pompe au boîtier, caractérisé en ce que le boîtier est suspendu par un organe élastique à l'intérieur d'un bac contenant une réserve de carburant et en ce que le boîtier porte un régulateur de pression disposé sur le trajet du carburant entrant ou sortant du boîtier.

Grâce à l'invention, la pompe, la crépine, le boîtier, le régulateur de pression et le conduit forment un sous-ensemble dont la masse est relativement importante, ce qui permet d'amortir les vibrations par déplacement contrôlé grâce à la suspension élastique de ce sous-ensemble à l'intérieur du bac contenant la réserve de carburant. De plus, l'invention permet de réaliser un dispositif particulièrement compact, ce qui facilite sa mise en place à l'intérieur d'un réservoir et permet de diminuer son prix de revient. Les vibrations créées dans le régulateur sont donc également amorties grâce à la masse relativement importante de ce sous-ensemble et au caractère élastique de la suspension de ce sous-ensemble à l'intérieur du bac.

Selon un premier aspect avantageux de l'invention, le récipient sous pression est constitué de deux pièces moulées et soudées entre elles formant une cavité de réception de la cartouche filtrante, une pièce moulée supportant un logement pour un régulateur de pression et des embouts pour le raccordement des tuyaux. Cette construction du récipient sous pression est particulièrement économique et permet de réaliser efficacement la fonction recherchée.

Selon un autre aspect avantageux de l'invention, le récipient sous pression comprend des moyens de fixation et de support de la pompe et de sa crépine d'aspiration. Ces moyens de fixation permettent de transmettre au boîtier les vibrations générées dans la pompe et destinées à être amorties grâce à l'organe élastique de suspension.

Selon une première variante de réalisation de l'invention, l'organe élastique de suspension est constitué de plusieurs branches élastiques placées entre le bac et le récipient. Selon une autre variante de réalisation de l'invention, l'organe élastique de suspension est constitué d'une seule pièce moulée en matière plastique ou en élastomère. Dans ce cas, on peut prévoir que cette pièce comprend deux anneaux respectivement prévus pour venir au contact dudit récipient et dudit bac, lesdits anneaux étant reliés par plusieurs pattes élastiques.

Quel que soit le mode de réalisation considéré, on peut prévoir que la partie de carburant déchargée par le régulateur retourne, par un conduit spécifique, vers un orifice d'entrée du bac contenant la réserve de carburant. Dans ce cas, le conduit de retour vers le bac se termine avantageusement par un orifice placé en regard d'un orifice plus grand du bac, créant une aspiration du carburant contenu dans le réservoir. Il est alors possible de prévoir que l'orifice du bac peut être obturé par un clapet.

L'invention concerne également un réservoir de carburant pour véhicule automobile équipé d'un dispositif de pompage tel que précédemment décrit.

L'invention sera mieux comprise et d'autres avantages de celle-ci apparaîtront plus clairement à la lumière de la description qui va suivre de quatre modes de réalisation d'un dispositif de pompage d'un carburant pour véhicule automobile conforme à son principe, donnée uniquement à titre d'exemple et faite en référence aux dessins annexés dans lesquels :
- la figure 1 est une vue en coupe verticale de principe montrant un dispositif de pompage conforme à un premier mode de réalisation de l'invention ;
- la figure 2 est une vue analogue à la figure 1 pour un dispositif de pompage conforme à un second mode de réalisation de l'invention ;
- la figure 3 est une vue analogue à la figure 1 pour un dispositif de pompage conforme à un troisième mode de réalisation de l'invention ;
- la figure 4 est une coupe partielle de principe d'un régulateur pouvant être utilisé en variante avec l'un des dispositifs des figures 1 à 3 ;
- la figure 5 est une vue analogue à la figure 1 pour un dispositif de pompage conforme à un quatrieme mode de réalisation de l'invention et
- la figure 6 est une vue en perspective d'une bague de suspension élastique du dispositif de la figure 5.

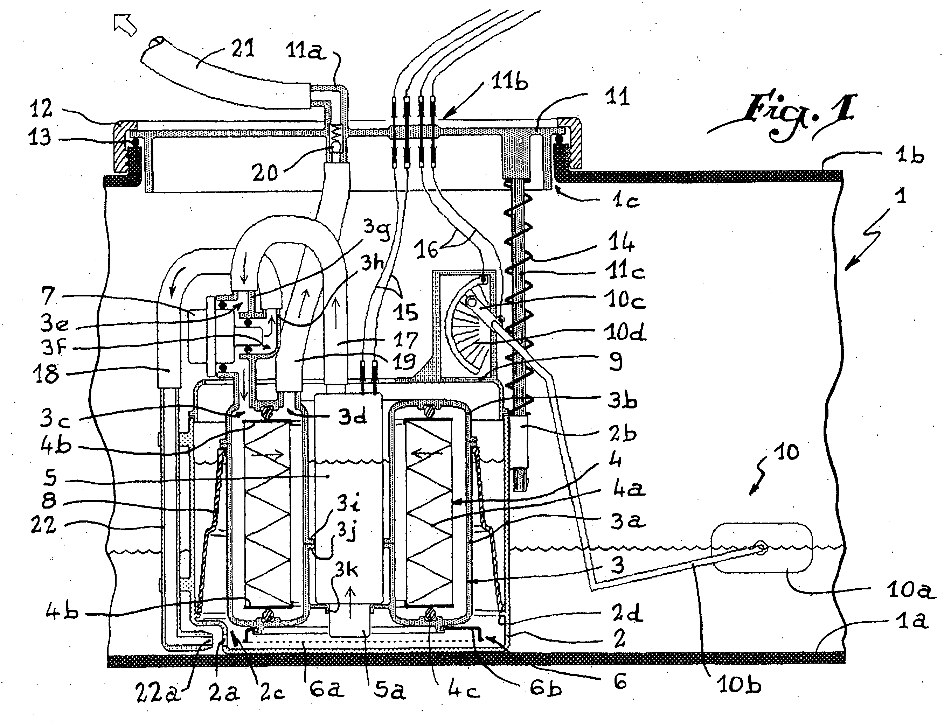

On a représenté en figure 1 le fond 1a et le dessus 1b d'un réservoir 1 à carburant de véhicule automobile.

Un bac 2 est placé dans le réservoir 1 pour constituer une réserve de carburant. Ce bac comprend un récipient 3 composé de deux pièces 3a et 3b formant une cavité en forme de tore contenant une cartouche filtrante 4. Ces deux pièces 3a et 3b sont réalisées de préférence en matière plastique et soudées entre elles de manière étanche et résistant à la pression du carburant. La cartouche filtrante 4 est constituée d'un média filtrant très fin 4a tenu entre deux flasques 4b et maintenu dans le récipient 3 par deux joints d'étanchéité 4c, de sorte que l'intérieur et l'extérieur de la cartouche sont isolés l'un de l'autre et qu'il reste, tant à l'intérieur qu'à l'extérieur de la cartouche, un espace en forme de couronne annulaire entre le média filtrant 4a et le récipient.

La pression d'alimentation du récipient 3 est générée par une pompe électrique 5 placée dans le trou central du récipient 3 et tenue de manière étanche sur son nez 5a. En partie basse du récipient 3 est fixée une crépine 6, formée d'une toile 6a à mailles fines soudée sur un support 6b, lui-même emmanché sur le récipient 3.

Sur ce récipient 3 sont prévus une entrée 3c et une sortie 3d. La sortie 3d est un embout de raccordement d'un tuyau. L'entrée 3c se prolonge par deux logements 3e et 3f et deux embouts 3g et 3h de raccordement de tuyau. Tous ces éléments 3c, 3d, 3e, 3f, 3g, 3h sont issus du moulage du couvercle 3b du récipient 3 et forment une seule pièce. Bien entendu, les éléments 3c à 3h pourraient également être constitués par des pièces rapportées sur la pièce 3b. Les logements 3e, 3f reçoivent un régulateur de pression 7 de construction connue, dont le rôle est de maintenir la pression du carburant à une valeur stable, condition essentielle au bon fonctionnement du moteur. L'étanchéité entre l'entrée et la sortie du régulateur est assurée par deux joints toriques. Le régulateur est maintenu en place par tout moyen approprié tel que vis, agrafe, etc...

La pompe 5 est, quant à elle, fixée par rapport au récipient 3 grâce à des collerettes internes 3i, 3j et 3k définissant un volume de réception de la pompe 5 dans la partie centrale du récipient 3. Les collerettes 3i et 3j servent également à la soudure étanche des pièces 3a et 3b.

Le sous-ensemble formé du récipient en forme de tore 3 auquel sont fixés la cartouche filtrante 4, la pompe 5, la crépine 6 et le régulateur 7, est lui-même raccordé au bac 2 par l'intermédiaire de plusieurs pattes 8 formant une suspension élastique de ce sous-ensemble dans le bac 2. Cette suspension élastique peut être telle que celle qui est décrite dans la demande de brevet européen 0 773 362. Tout autre dispositif assurant cette fonction, réalisé de préférence en matière plastique ou en caoutchouc, ou une association des deux peut également être utilisé et, notamment, une unique pièce moulée en matière plastique destinée à être disposée entre le récipient 3 et le bac 2.

Ce bac 2 est fermé par un couvercle 9. Un sous-ensemble de mesure du niveau de carburant 10 peut être fixé sur ce couvercle 9, ou sur le bac 2.

Le bac 2 et les sous-ensembles décrits sont introduits dans le réservoir 1 par un orifice 1c ménagé dans la paroi supérieure 1b. Cet orifice est fermé de façon étanche par une platine 11. Cette platine est traversée de façon étanche par une tubulure 11a et un connecteur électrique 11b. La platine est tenue par un écrou 12 serrant un joint d'étanchéité 13.

Le bac 2, ainsi que tous les éléments qu'il contient et supporte, est maintenu, de préférence, plaqué sur le fond 1a du réservoir. Ceci peut se faire par un système à ressort, tel qu'une colonne 11c, venue de matière avec la platine 11 et guidée par une partie 2b du bac 2, la colonne 11c guidant un ressort 14 de compression.

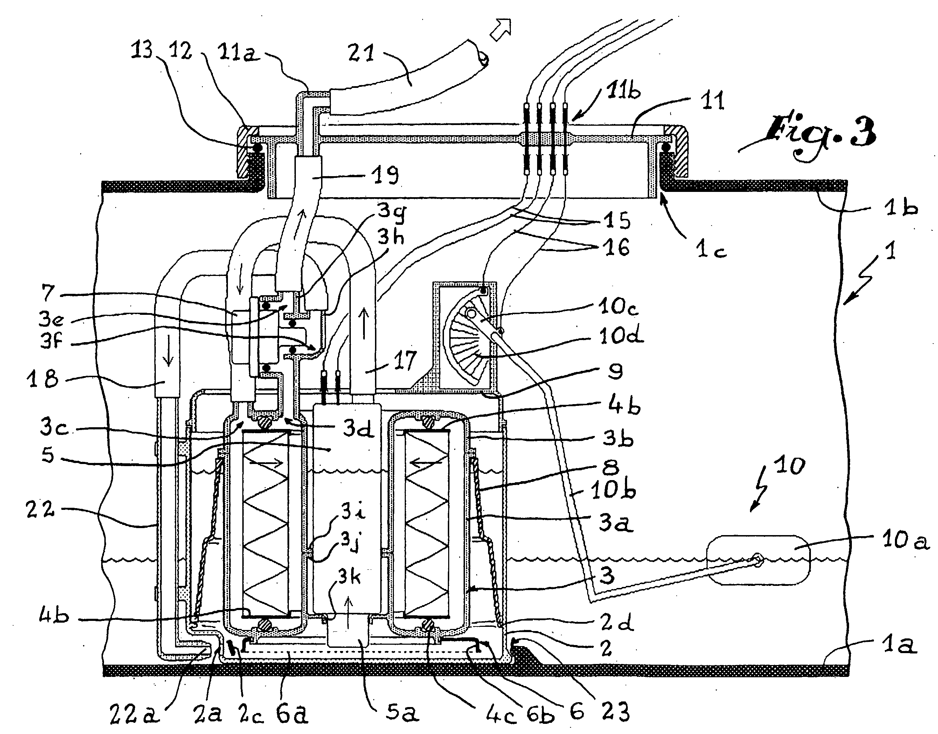

Il est possible aussi d'utiliser le principe schématisé en 23 sur la figure 3 : le bac est accroché sur le fond du réservoir par un moyen approprié, du type à baïonnette ou encliquetage. Ceci peut permettre une plus grande liberté de positionnement du bac et de son équipement par rapport à la platine, par exemple un déport du dispositif par rapport à l'orifice 1c parfois dénommé "trou de bonde".

L'ensemble est alors prêt à fonctionner de la façon décrite ci-après, correspondant à la figure 1.

La pompe électrique 5 aspire, à travers la crépine 6, le carburant contenu dans le bac 2. Le rôle de cette crépine est de réaliser une première filtration protégeant les organes de la pompe.

Ce carburant est refoulé sous pression par un tuyau 17 branché sur l'embout 3g du récipient 3 et envoyé sur le régulateur 7 qui agit en limiteur de pression, déchargeant une partie du carburant vers l'embout 3h pour maintenir à une valeur constante la pression de la partie du carburant entrant par le conduit 3c.

Ce carburant arrive dans la couronne annulaire extérieure au média filtrant 4a de la cartouche 4, puis traverse ce média dont le rôle est de retenir les particules les plus fines pouvant perturber le fonctionnement des injecteurs de carburant. Cette cartouche possède une surface de média filtrant suffisamment grande pour que son encrassement cumulé durant la vie du véhicule ne perturbe pas le passage du carburant. La cartouche peut ainsi assurer toute la durée de vie du véhicule, sans qu'il soit nécessaire de la remplacer.

Le carburant filtré arrive dans la couronne annulaire intérieure au média filtrant et ressort du récipient 3 par l'embout 3d auquel est branché un tuyau 19, lui-même raccordé à une tubulure 11a, assurant la traversée étanche de la platine 11 et le raccordement au tuyau 21 d'alimentation du moteur, vers lequel s'écoule donc un carburant parfaitement filtré et régulé en pression.

La pompe 5 contient normalement un clapet qui peut être installé, avec la référence 20, dans la tubulure 11a. Ceci permet que, lors de l'arrêt de la pompe, le carburant reste en pression dans la conduite 21 et.donc dans les injecteurs, comme cela est nécessaire. Mais ceci permet aussi que la pression du carburant contenu dans le récipient 3 puisse revenir à la pression du réservoir, en évitant ainsi de maintenir inutilement ce récipient 3 sous contrainte.

La partie du carburant déchargée par le régulateur 7 vers l'embout 3h est amenée par le tuyau 18 vers une conduite 22. La forme particulière de l'extrémité 22a de ce conduit, et sa disposition en regard d'un orifice 2a du bac 2, crée un système dit "Venturi" qui aspire le carburant du réservoir et le refoule dans le bac 2. Ce dispositif est particulièrement utile lorsque le niveau de carburant est très bas, car il crée une réserve dans le bac 2, autour de la crépine d'aspiration 6, évitant tout désamorçage intempestif de la pompe.

Un clapet 2c peut compléter le dispositif pour limiter la vidange du bac 2, ou même l'empêcher, selon le type de clapet choisi. Ce clapet est conçu de sorte à laisser entrer, dans le bac 2, le carburant refoulé par le dispositif à Venturi, mais empêche le carburant de s'écouler hors du bac lorsque le Venturi ne fait plus effet, par exemple lorsque la pompe est arrêtée lors d'un arrêt du moteur. L'avantage de ce dispositif est de pouvoir redémarrer le véhicule alors que le niveau de carburant dans le réservoir serait sans cela insuffisant pour permettre le réamorçage de la pompe.

Un couvercle 9 peut aussi éviter qu'une partie de cette réserve de carburant ne s'échappe lors des mouvements divers du véhicule.

Un système 10 de mesure du niveau de carburant peut être supporté par le bac 2 ou son couvercle 9. Ce système peut être par exemple un flotteur 10a qui transmet les mouvements du carburant par un bras 10b à un curseur 10c qui se déplace sur une couche de céramique 10d formant une résistance variable, dont la valeur, image du niveau de carburant, est envoyée vers l'indicateur du tableau de bord par des câbles 16, traversant de manière étanche la platine 11 par un connecteur 11b. Ce connecteur peut assurer également l'alimentation électrique de la pompe branchée par les câbles 15.

Les avantages de cette disposition sont une grande compacité, particulièrement utile dans des réservoirs de faible hauteur, et une grande facilité d'introduction de l'ensemble dans le réservoir. De plus toutes les parties sous pression telles que la pompe 5, le tuyau 17, le récipient 3, avec le logement 3e du régulateur et les embouts 3g et 3d et le régulateur 7, susceptibles de générer des vibrations, forment un ensemble compact, rigide et relativement massif amortissant ces vibrations, isolé en terme vibratoire par la suspension 8 et les tuyaux souples 18 et 19. Ceci a le double avantage de maintenir le bruit émis à une valeur très faible et d'isoler du réservoir et de la platine 11, les pièces soumises par la pression à des contraintes mécaniques constantes et variables. Ainsi, la platine 11 assure en toute sécurité son rôle de fermeture étanche du réservoir, n'ayant que la seule tubulure 11a, inévitable pour permettre le passage, du réservoir vers le moteur, du carburant filtré et sous pression régulée.

Un autre avantage du dispositif de l'invention est la possibilité de modifier très simplement le cheminement du carburant pour l'adapter à différentes exigences particulières, et ce, sans nuire aux autres avantages. En effet, dans le dispositif tel que décrit en référence à la figure 1, le carburant est d'abord régulé en pression puis finement filtré. Pour certaines applications, il peut être préférable d'inverser la configuration, c'est-à-dire de premièrement filtrer le carburant, puis de réguler sa pression. Ceci peut alors avoir l'avantage d'une meilleure précision de la régulation.

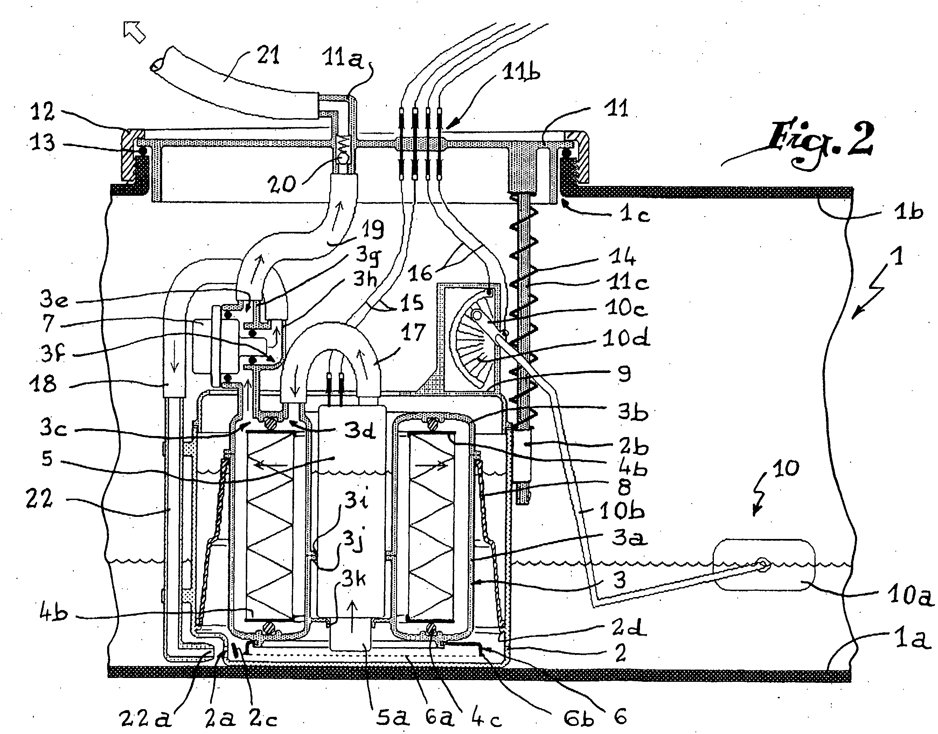

Pour permettre cette configuration, une première variante est prévue, telle que schématisée en figure 2. La modification par rapport à la figure 1 consiste simplement à intervertir les tuyaux 17 et 19. Ceci permet que le carburant mis en pression par la pompe 5 aille directement vers le récipient contenant le filtre, dont l'entrée est alors l'embout 3d. Le carburant traverse ensuite le média filtant 4a de la cartouche 4, de l'intérieur vers l'extérieur, puis ressort par la tubulure 3c et arrive sur le régulateur de pression 7, qui décharge une partie du carburant vert l'embout 3h et le tuyau 18, tandis que la partie du carburant régulée en pression sort par l'embout 3g vers le tuyau 19.

Une deuxième variante est représentée en figure 3. La modification par rapport à la figure 2 consiste essentiellement à intervertir les embouts 3c et 3d du récipient 3 contenant le filtre 4. Ceci oblige le carburant à traverser le filtre de l'extérieur vers l'intérieur de celui-ci, disposition pouvant être préférable pour certains types de cartouches filtrantes, par exemple pour une meilleure tenue mécanique de celles-ci.

Dans les modes de réalisation des figures 2 et 3, l'organe élastique de suspension est constitué par une bague cylindrique 8' en polyéthylène s'étendant autour du boîtier 3 jusqu'au contact du bac 2, en appui sur une collerette interne 2d de celui-ci. Cette bague peut également être réalisée en polyacétal ou dans une autre matière thermoplastique, voire en élastomère.

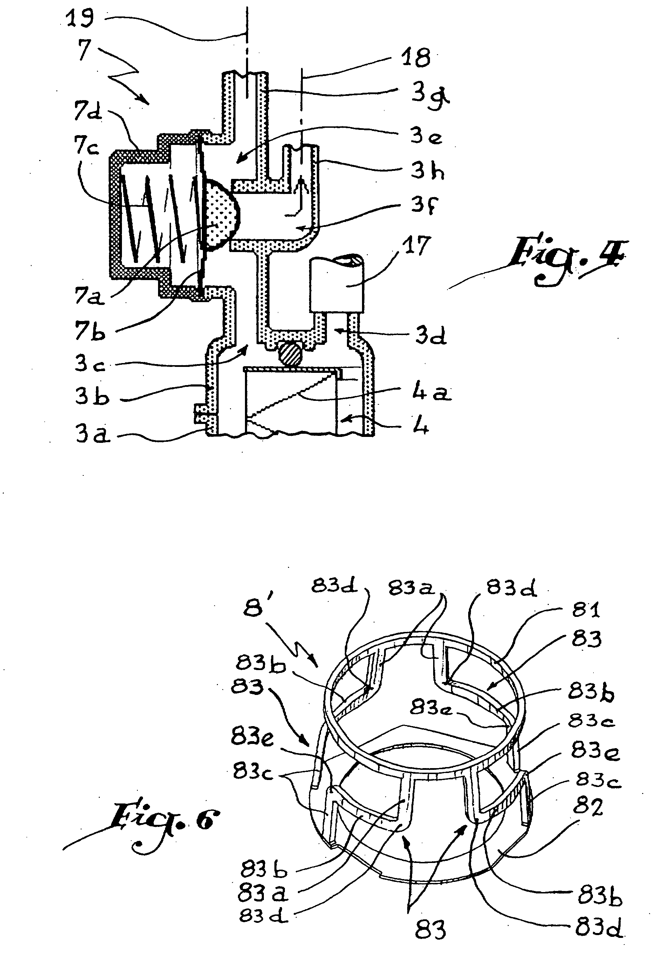

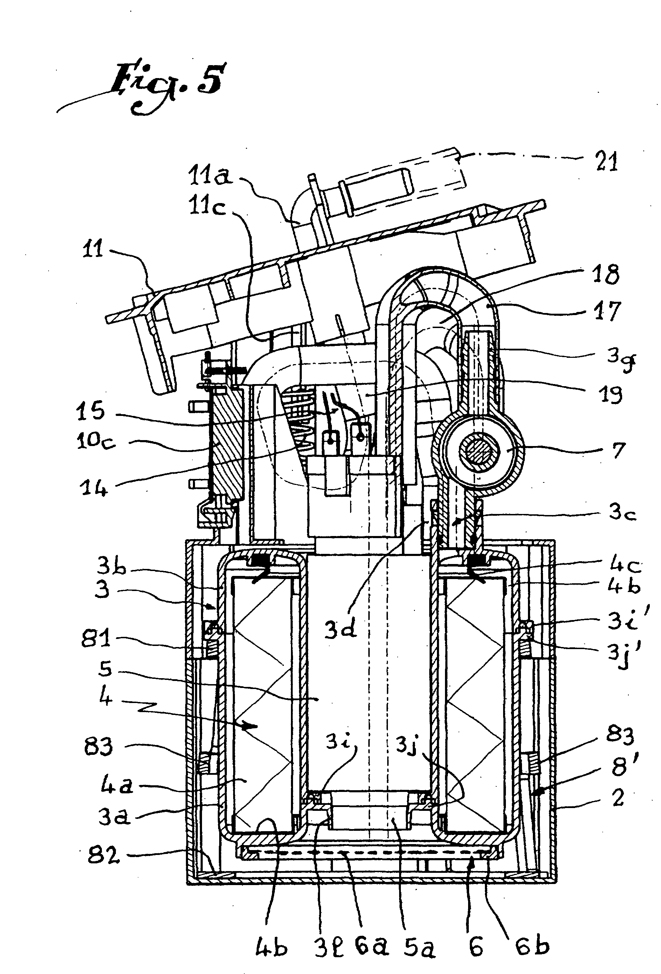

Un autre avantage de l'invention est de pouvoir utiliser des régulateurs de pression de formes ou dimensions différentes par variante du seul couvercle 3b du récipient 3. En particulier une variante illustrée en figure 4 prévoit l'intégration du régulateur au couvercle 3b. Un capot 7d permet la fixation directe, sur le logement 3e du couvercle, d'un sous-ensemble clapet 7a, membrane 7b, ressort 7c .Ce régulateur fonctionne en clapet de décharge : le ressort 7c est taré à une valeur telle que le clapet s'ouvre quand la pression dépasse une valeur limite fixée.

Dans le mode de réalisation de l'invention représenté à la figure 5, la pompe 5 est logée dans l'évidement central de la pièce 3b contre laquelle elle repose sur la quasi totalité de sa hauteur. Les collerettes 3i et 3j dont l'utilité est de permettre la soudure des deux pièces 3a et 3b du récipient 3 sont disposées à la partie inférieure de ce récipient de sorte que la pompe 5 vient en appui contre la collerette 3i. Des collerettes analogues 3i' et 3j' sont formées sur la face extérieure du récipient 3 pour la soudure étanche des pièces 3a et 3d. La collerette 3j se prolonge par un manchon 31 destiné à entourer le nez 5a de la pompe 5. Une crépine 6 est formée dans la partie inférieure du récipient 3 grâce à un support 6b maintenant en position une toile 6a. Le manchon 31 permet une liaison étanche avec le nez 5a.

Comme précédemment, le média filtrant 4a est maintenu entre deux flasques 4b, le flasque inférieur étant directement en appui contre la pièce 3a. Ainsi, un seul joint 4c peut être utilisé. Le régulateur 7 est ici disposé perpendiculairement au plan de coupe immédiatement au-dessus de l'entrée 3c du récipient 3 dans un tuyau souple 17 relié à la sortie de la pompe 5. Le conduit 18 d'évacuation du carburant en excès vers un système à Venturi est disposé en arrière du tuyau 17 par rapport au plan de coupe.

Par ailleurs, le conduit 19 reliant la sortie 3d du récipient 3 a une tubulure 11a fixée sur une platine 11 forme une boucle représentée par un trait mixte.

Conformément à l'invention, une bague de suspension élastique 8' est disposée entre le sous-ensemble formé des pièces 3 à 6 et un bac 2 contenant une réserve de carburant. Cette bague 8', plus particulièrement visible à la figure 6, est réalisée en polyéthylène, en polyacétal ou en une autre matière thermo-plastique, voire en élastomère et comprend un anneau supérieur 81 et un anneau inférieur 82 reliés par plusieurs pattes 83, ici au nombre de quatre. Les pattes 83 sont formées de sections 83a, 83b et 83c non parallèles, ce qui permet un débattement de l'anneau 81 par rapport à l'anneau 82 ou réciproquement en jouant sur la souplesse des zones de raccordement 83d et 83e entre les sections 83a, 83b et 83c qui sont essentiellement rectilignes.

Bien entendu, d'autres géométries peuvent être envisagées pour les pattes 83 pour autant qu'elles permettent une suspension élastique des pièces supportées par cette bague.

## Revendications

1. Dispositif de pompage de carburant pour véhicule automobile comprenant une pompe (5) munie d'une crépine d'aspiration (6) et un boîtier (3) sous pression contenant une cartouche filtrante (4), ledit boîtier supportant ladite pompe, ladite crépine et un conduit (17) reliant ladite pompe audit boîtier, **caractérisé en ce que** ledit boîtier est suspendu par un organe élastique (8, 8') à l'intérieur d'un bac (2) contenant une réserve de carburant et **en ce que** ledit boîtier (3) porte un régulateur de pression (7) disposé sur le trajet de carburant entrant ou sortant dudit boîtier.

2. Dispositif de pompage selon la revendication 1, **caractérisé en ce que** le récipient sous pression (3) est constitué de deux pièces (3a, 3b) moulées et soudées entre elles formant une cavité de réception de la cartouche filtrante (4), une pièce moulée (3b) supportant des logements (3e, 3f) pour un régulateur de pression (7) et des embouts (3d, 3g, 3h) pour le raccordement de tuyaux (17, 18, 19).

3. Dispositif de pompage selon l'une des revendications précédentes, **caractérisé en ce que** le récipient sous pression (3) comprend des moyens (3i, 3j, 3k, 3l) de fixation et de support de la pompe (5) et de sa crépine d'aspiration (6).

4. Dispositif de pompage selon l'une des revendications précédentes, **caractérisé en ce que** l'organe élastique de suspension est constitué de plusieurs branches élastiques (8) placées entre le bac (2) et le récipient (3).

5. Dispositif de pompage selon l'un des revendications 1 à 3, **caractérisé en ce que** l'organe élastique de suspension élastique est constitué d'une seule pièce (8'), moulée en matière plastique ou en élastomère.

6. Dispositif de pompage selon la revendication 5, **caractérisé en ce que** ladite pièce comprend deux anneaux (81, 82) respectivement prévus pour venir au contact dudit récipient (3) et dudit bac (2), lesdits anneaux étant reliés par plusieurs pattes élastiques (83).

7. Dispositif de pompage selon la revendication 6, **caractérisé en ce que** lesdites pattes élastiques (83) sont formées de sections (83a, 83b et 83c) essentiellement rectilignes, non parallèles et reliées par des zones de raccordement (83d, 83e).

8. Dispositif de pompage selon l'une des revendications précédentes, **caractérisé en ce que** la partie de carburant déchargée par le régulateur retourne, par un conduit spécifique (22), vers un orifice d'entrée (2a) du bac (2) contenant la réserve de carburant.

9. Dispositif de pompage selon la revendication 8, **caractérisé en ce que** le conduit (22) de retour vers le bac (2) se termine par un orifice (22a) placé en regard d'un orifice plus grand (2a) du bac (2), créant une aspiration du carburant contenu dans le réservoir.

10. Dispositif de pompage selon la revendication 9, **caractérisé en ce que** l'orifice (2a) du bac (2) peut être obturé par un clapet (2c).

11. Réservoir de carburant pour véhicule automobile, **caractérisé en ce qu'**il comprend un dispositif de pompage (1-22) selon l'une des revendications précédentes.

## Claims

1. Fuel pumping device for a motor vehicle, comprising a pump (5) fitted with a suction strainer (6) and with a casing (3) under pressure containing a filter cartridge (4), the said casing supporting the said pump, the said strainer and a pipe (17) connecting the said pump to the said casing, **characterized in that** the said casing is suspended from an elastic member (8, 8') inside a sump (2) containing a reserve of fuel and **in that** the said casing (3) bears a pressure regulator (7) arranged in the path of the fuel entering or leaving the said casing.

2. Pumping device according to Claim 1, **characterized in that** the pressurized container (3) consists of two parts (3a, 3b) moulded and welded together to form a cavity to house the filter cartridge (4), one moulded part (3b) supporting housings (3e, 3f) for a pressure regulator (7) and end pieces (3d, 3g, 3h) for the connecting of hoses (17, 18, 19).

3. Pumping device according to one of the preceding claims, **characterized in that** the pressurized container (3) comprises means (3i, 3j, 3k, 3l) for fixing and supporting the pump (5) and its suction strainer (6).

4. Pumping device according to one of the preceding claims, **characterized in that** the elastic suspension member consists of several elastic branches (8) placed between the sump (2) and the container (3).

5. Pumping device according to one of Claims 1 to 3, **characterized in that** the elastic suspension member consists of a single piece (8') moulded in plastic or elastomer.

6. Pumping device according to Claim 5, **characterized in that** the said part comprises two rings (81, 82) provided respectively to come into contact with the said container (3) and with the said sump (2), the said rings being connected by several elastic tabs (83).

7. Pumping device according to Claim 6, **characterized in that** the said elastic tabs (83) are formed of essentially straight non-parallel sections (83a, 83b and 83c) connected by connecting regions (83d, 83e).

8. Pumping device according to one of the preceding claims, **characterized in that** the proportion of fuel discharged by the regulator returns, through a specific pipe (22), to an inlet orifice (2a) of the sump (2) containing the reserve of fuel.

9. Pumping device according to Claim 8, **characterized in that** the pipe (22) returning to the sump (2) ends in an orifice (22a) placed facing a larger orifice (2a) of the sump (2), creating suction of the fuel contained in the tank.

10. Pumping device according to Claim 9, **characterized in that** the orifice (2a) in the sump (2) can be closed off by a valve shutter (2c).

11. Fuel tank for a motor vehicle **characterized in that** it comprises a pumping device (1-22) according to one of the preceding claims.

## Patentansprüche

1. Kraftstoff-Pumpvorrichtung für ein Kraftfahrzeug, umfassend eine Pumpe (5), welche mit einem Saugkorb (6) und einem unter Druck stehenden Gehäuse (3) versehen ist, welches eine Filterkartusche (4) enthält, wobei das Gehäuse die Pumpe, den Korb und eine Leitung (17) abstützt, welche die Pumpe mit dem Gehäuse verbindet, **dadurch gekennzeichnet, dass** das Gehäuse mittels eines elastischen Organs (8, 8') im Inneren eines eine Kraftstoffreserve enthaltenden Kastens (2) aufgehängt ist und dass das Gehäuse (3) einen Druckregler (7) trägt, welcher auf dem Weg des in das Gehäuse eintretenden oder dieses verlassenden Kraftstoffs angeordnet ist.

2. Pumpvorrichtung nach Anspruch 1, **dadurch gekennzeichnet, dass** der unter Druck stehende Behälter (3) aus zwei gegossenen und verschweißten Teilen (3a, 3b) gebildet ist, welche zwischen sich einen Hohlraum zum Aufnehmen der Filterkartusche (4) bilden, wobei ein gegossener Teil (3b) Aufnahmen (3e, 3f) für einen Druckregler (7) und Ansatzstücke (3d, 3g, 3h) für den Anschluss von Schläuchen (17, 18, 19) trägt.

3. Pumpvorrichtung nach einem der vorhergehenden Ansprüche, **dadurch gekennzeichnet, dass** der unter Druck stehende Behälter (3) Einrichtungen (3i, 3j, 3k, 3l) zum Fixieren und Abstützen der Pumpe (5) und deren Saugkorbs (6) aufweist.

4. Pumpvorrichtung nach einem der vorhergehenden Ansprüche, **dadurch gekennzeichnet, dass** das elastische Organ zum Aufhängen aus mehreren elastischen Schenkeln (8) gebildet ist, welche zwischen dem Kasten (2) und dem Behälter (3) angeordnet sind.

5. Pumpvorrichtung nach einem der Ansprüche 1 bis 3, **dadurch gekennzeichnet, dass** das elastische Organ zum elastischen Aufhängen aus einem einzigen Teil (8') gebildet ist, welches aus Kunststoff oder einem Elastomer geformt ist.

6. Pumpvorrichtung nach Anspruch 5, **dadurch gekennzeichnet, dass** das Teil zwei Ringe (81, 82) aufweist, welche im einzelnen dazu vorgesehen sind, mit dem Behälter (3) und dem Kasten (2) in Kontakt zu kommen, wobei die Ringe durch mehrere elastische Stützen (83) verbunden sind.

7. Pumpvorrichtung nach Anspruch 6, **dadurch gekennzeichnet, dass** die elastischen Stützen (83) aus im wesentlichen geradlinigen, nicht parallelen und mittels Verbindungsbereichen (83d, 83e) verbundenen Abschnitten (83a, 83b und 83c) gebildet sind.

8. Pumpvorrichtung nach einem der vorhergehenden Ansprüche, **dadurch gekennzeichnet, dass** der durch den Regler ausgelassene Teil des Kraftstoffs mittels einer speziellen Leitung (22) zu einer Eintrittsöffnung (2a) des Kastens (2), welcher die Kraftstoffreserve enthält, zurückgeführt wird.

9. Pumpvorrichtung nach Anspruch 8, **dadurch gekennzeichnet, dass** die zum Kasten (2) rückgeführte Leitung (22) mittels einer Öffnung (22a) endet, welche gegenüber einer größeren Öffnung (2a) des Kastens (2) angeordnet ist, welche eine Ansaugung des in dem Tank enthaltenen Kraftstoffs herbeiführt.

10. Pumpvorrichtung nach Anspruch 9, **dadurch gekennzeichnet, dass** die Öffnung (2a) des Kastens (2) durch eine Klappe (2c) verschlossen sein kann.

11. Kraftstofftank für ein Kraftfahrzeug, **dadurch gekennzeichnet, dass** er eine Pumpvorrichtung (1 - 22) nach einem der vorhergehenden Ansprüche aufweist.
